# EUROPEAN PATENT APPLICATION

(11) **EP 1 324 220 A1**
(43) Date of publication of application: **02.07.2003**
(21) Application number: 01811272.2
(22) Date of filing: 24.12.2001
(51) Int. Cl.: G06F 17/30

(54) **Process and system for generating and improving a collection of information objects**

(71) Applicant: ABB RESEARCH LTD., 8050 Zürich (CH)
(72) Inventor: Karhu, Katja, 5405 Baden (CH); Gelle, Esther, 8965 Berikon (CH); Le, Julien, 1008 Prilly (CH); Riffel, Michael, 76709 Kronau (DE); Schepik, Viktor, 73579 Schechingen (DE)
(74) Representative: ABB Patent Attorneys

(57) **Abstract**

The invention is directed to a process for automatically generating and/or improving a data collection of information objects, comprising the following steps: retrieving at least one information object from a data pool of information objects; determining the relevance of at least one of the retrieved information objects to at least one user; and storing those information objects in a data collection having a relevance greater than a preset threshold. The invention is further directed to a data collecting system for automatically generating and/or improving a data collection of information objects, comprising an information object retrieving means for retrieving information objects from a data pool of information objects; a relevance determination means for determining the relevance of at least one of the retrieved information objects to at least one user and for determining if the relevance of an information object is higher than a preset threshold; a data collection for storing information objects having a relevance higher than the threshold.

## Description

### Technical Field of the Invention

The present invention concerns a process for automatically generating and/or improving a data collection of information objects, and a data collecting system for such a data collection.

### State of the Art

Informational overload is an increasingly significant problem in contemporary societies. One of the primary sources of information and reason for its dramatic increase has been the Internet. Therefore, tools have been developed to help internet users search the Internet for desired information. However, Internet searches for certain pieces of information quite often lead to a great number of search hits, not all of which might actually contain useful information. Also, there is a tendency that the quality of these information sources has decreased significantly with the Internet growing at its recent pace.

Currently, there is a boom to build so called "portals" that show information, which is filtered from the Internet according to some preset criteria. The information objects filtered from the Internet are shown on the portal with push technology, using commercial tools and/or user interfaces that can be obtained freely from the Internet.

The information objects contained in or referenced by such portals is often selected in a manual fashion, where an operator of the portal decides, after having looked at the information object, whether it might be useful for the intended users of this portal, and if so, includes it in the data base of the portal. In other words, an operator decides, in an "ad hoc" style, if the relevance of an information object has a relevance greater than a subjective threshold "felt" by the operator.

Accordingly, such portals (or other information collections) very often reflect more the operator's assumptions than actual requirements of the users. Further, to satisfy as many needs as possible, portals tend to be overloaded with information. Thus, it is the object of the present invention to provide means for better taking into account actual user requirements when searching for information.

### Description of the Invention

This object is solved by the process for automatically generating and/or improving a data collection according to independent claim 1, a data collection system according to independent claim 12, and the use of a user-relevance of an information object according to independent claim 18. Further advantageous aspects, details and embodiments of the present invention will become more readily evident from the dependent claims, and the description.

The invention is based on the idea of combining a search in a data pool with a relevance ranking for retrieved information objects, and storing those of a particular relevance.

Accordingly, the invention is first directed to a process for automatically generating and/or improving a data collection of information objects, comprising the following steps:
- retrieving at least one information object from a data pool of information objects;
- determining the relevance of at least one of the retrieved information objects to at least one user; and
- storing those information objects in a data collection, which have a relevance greater than a preset threshold.

While the term "data pool" as used herein, characterises a large amount of information objects which are somewhat accessible to the inventive process, and may reside at one or numerous different places, the term data collection is used for indicating a collection of information objects which have been specifically selected by the inventive method. The data collection may comprise the very information objects that were found in the data pool, it may however also consist of links linking to the physical or logical site(s) where the original information objects had been retrieved.

The process will usually be run on a data processing device or a similar hardware device specifically built for the process. In most cases, a device like a personal computer or a midrange data processing device will be used, which generally includes a processing unit for running a program which implements the inventive process, main memory for storing the program, a mass storage device for storing the data collection, and either further storage for the data pool, or/and an interface to a network of networked computers on which the data pool is implemented.

The retrieval may be done by transferring the entire information object to the system running the inventive process. It may however also be done by transferring only selected parts of the information object to that system, e.g. only a title, abstract and link information. The retrieval may be done by a special program or device set up for that purpose, or by a more generic tool like a HTML page browser, which has been extended by the required functionality.

The retrieved information objects may be found in the data pool by user determined search criteria, like key words, or other specification, which is entered by a user immediately prior to performing the search. Alternatively, the search can be done periodically and automatically, through a list of key words etc. In such cases, no user interaction is required. This embodiment of the invention is best suited if the user's search criteria remain the same over an extended period of time, e.g. if the user wants recent information on a specific topic every week.

For determining if an information object should be stored in the data collection, a threshold is used. This is a numeric value expressing a relevance, which an information object should at least have before it will be stored in the data collection. According to the invention, this value is preset, i.e. the threshold value is set in advance and stored for access through the system executing the inventive process. "Preset" does not mean, however, that the value may not be changed. If need be, the user may e.g. change the threshold to a higher value, in order to avoid information overflow in technical fields where a lot of relevant information is available. It could even be considered to couple the threshold to a particular technical field, and have different thresholds for different fields.

While the data collection can be implemented in a conventional database, like a relational database, it is preferred that the data collection is implemented in an information portal presenting references to information objects. Such portals require a database working in the background as well; they however differ from the classical data base in how the information is presented, namely as a list of links to the information objects, further containing information like the title of the information object (if there is a title), an abstract (if the information object consists of abstractable information) etc.

The data collection may itself be structured, for example in order to allow for an easy finding of information contained therein. Preferably, the data collection comprises a plurality of categories, under which the information objects are stored. Through such a category system, it is possible to "navigate" through the collection of information objects.

One aspect of the invention is the enhanced accessibility of the information objects which are to be stored after their relevance was determined to be sufficient. Therefore, it is preferred that the information objects stored in the data collection are more readily accessible than the information objects in the data pool. This can e.g. be achieved through shorter retrieval times of locally stored information objects, the better organisation of the stored objects (e.g. through categorisation), or their indexing.

As mentioned above, the data pool may be constituted of information objects which are distributed on some kind of network having a plurality of computers attached thereto. In particular, the data pool may reside in an intranet, an extranet, or the internet. An intranet is a network of computers closely attached and spacially neighboured, e.g. a network of computers in a plant, or an office building. They are most often connected via only one media, e.g. Ethernet. In contrast to this, an extranet is defined as a plurallity of computers, at least of portion of which is not spacially neighboured to other computers of the extranet. The access media generally consist of more than one type, e.g. Ethernet for local computers, and dial-up connections for remote computers. Finally, the Internet is defined as the world wide network of computers connected through the logical layer IP (in particular, TCP/IP, UDP, PPP, etc).

Several approaches for determining the relevance of information objects may be chosen or even combined. One of them is that a profile of interests predetermined for each user is used for determining the relevance of the information objects. Such profile may for example consist of a list of key words, which has either been set up by the user, or was generated from information objects a user already has indicated to be of particular importance to him.

It may be possible and will be preferred in a lot of circumstances to set up such profile separately for each user in a multi user system. The profile can then be specific to each user, and a data collection may be generated for each user separately. Alternatively, it is possible to check a particular information object against the profiles of all or a subset of all the users, and to store the relevant information objects in either a common data collection or in data collections of those users, for which the information object exceeded the preset threshold.

It will also be possible in a preferred embodiment that the relevance of the information object is determined for a plurality of users, and that the preset threshold is calculated from individual thresholds of the users in the plurality of users. For example, a mean value of all the relevance values could be calculated, which forms the basis for determining whether the preset relevance threshold has been exceeded.

The determination itself can be done in various manners. In general, items like words, phrases, or graphical elements showing up in an information object are looked for in the profile. If they occur in the profile, or similar elements occur, a certain relevance is attributed to the information object. Further, the relative position and arrangement of the identified items can also be considered. Also, the number, arrangement and position of the key words, which have been used for the initial search (prior to the determination of the relevance), may be considered for determining the relevance. After the relevance of an information object is determined in this manner, the value is compared to a preset threshold. If its value is higher than the preset value, it is considered sufficiently relevant and will be added (as object or as link) to the data collection. If not, it will be disregarded or discarded.

In a different approach for determining the relevance of an information object, it is preferred that the relevance of an information object is determined by presenting the information object to a user, and letting the user indicate the relevance for said information object. E.g., a user can be presented with a choice of possible relevance values, one of which must be selected, or the user can directly enter a value into the system.

Both methods may of course be combined. A profile can be used alongside with an individual evaluation of the relevance by the user. E.g., those documents considered most relevant by the inventive process in regards to the profile(s), can be presented to the user asking him for a personal opinion on the relevance. Alternatively, the user can be shown the information objects and the relevance evaluations the process has assigned them. The user could then, if need be, overwrite these values.

The user's indication of the relevance of an information object may further also determine if this information object is further used for updating that user's profile of interests. If a particular document is of relevance to the user, as indicated by exceeding the threshold (or an even higher value), it might well be worth to influence the profile.

A further approach to determining the relevance of an information object may be that it is determined by the number of invocations of said information object by a user or by a plurality of users. This is a very straightforward approach, since no complex calculations or user decisions are required.

In the forgoing, the inventive process including some of its preferred embodiments, has been highlighted. The invention is also directed to a system, which is able to execute the inventive process. Everything that was said in regards to the process also applies to the system, and vice versa.

Accordingly, the invention is further directed to a data collecting system for automatically generating and/or improving a data collection of information objects, comprising
an information object retrieving means for retrieving information objects from a data pool of information objects;
a relevance determination means for determining the relevance of at least one of the retrieved information objects to at least one user and for determining if the relevance of an information object is higher than a preset threshold;
a data collection for storing information objects having a relevance higher than the threshold.

The information object retrieving means may be any of the means known to those skilled in the art. Well known techniques have been implemented in HTML search engines and will in general be suitable for finding and retrieving the information objects. The retrieval can either be done by first searching the data pool with the help of key words, and then getting the found information objects (or information pertaining to these information objects), or by simply retrieving known information objects from known locations in the data pool. The latter may be used e.g. if the same information object (but with potentially changing content) has to be updated periodically.

The relevance determination means is able to determine the relevance of an information object. This may for example be done by any of the methods discussed above with respect to the inventive process.

The data collection finally stores all the information objects with sufficiently high relevance. Either, a single data collection may be used, or several data collections, for each user or group of users a separate one.

The data collecting system according to the invention may further comprise an information access system for presenting retrieved information objects and information objects contained in the data collection, and for selecting information objects by a user. Such a tool may be a generic information display program like a web browser with additional functionality, or a special program intended solely for that purpose. The information access system can display information objects, either those found by a search in the data pool (for example, for determining the relevance by a user), or those already contained in the data collection.

The information access system may further comprise means for a user defined indication of the relevance, if such option is to be implemented.

Of course, such a versatile information access system may not be required for all applications. For example, if the entire process of retrieving information objects from the data pool and determining their relevance is done automatically, there is no need for such a tool. Instead, it would then be sufficient to provide a program, which is just able of displaying objects of the data collection and, if need be, allows for the selection of particular entries in the data collection, either by key items, or by categories.

The data collecting system according to the invention may preferably comprise a relevance determining means which comprises a profile of interests for the at least one user used for determining the relevance of an information object to said user. The profile of interest and its variations has been extensively discussed with regard to the inventive process, to which is herewith referred for further information.

The data collecting system may further comprise a profile modification means for modifying the profile of interest based on new information objects having a relevance value higher than the threshold or another value. This means allows for a flexible adapting of the profiles of interest to changed conditions, e.g. a new focus of the user, additional interests, etc. This tool is intended to identify key items like key words in information objects, which a user has indicated to be of relevance to him. The key items can be extracted from such information objects based on known methods, e.g. by determining which words appear most often, or which words appear in close spatial relation to words already contained in the profile of interest, etc.

The data collecting system may be a computer program product, the components of which can be loaded at least partly into the main memory of a digital data processing device, and the program components of which can be executed by said digital processing device.

Finally, the invention is further directed to the use of the relevance of an information object to a user for determining if the information object will be stored in a data collection accessible at least to this user. While such relevance evaluations have been known in the art, the results have not been used for storing the information objects in a data collection made specifically for a user or a group of users.

### Ways to practising the invention

The invention is directed to a system and process that store information shown in a portal or other data base according to its relevance, e.g. as expressed by its popularity. This means that information objects presented to the user via e.g. a portal and push technology is further filtered automatically for storage, based on the relevance criteria. Only those information objects, which are of interest to the user(s) are stored in the data base. This enables an automatic creation of content containing high quality information in the data base, e.g. a portal. By this, it will be ensured that further "knowledge seekers" can utilise this information later on.

Some of the techniques, which may be employed when practising the invention, like filtering information automatically based on key words, are already known to those skilled in the art. But since the filtering of the information based on key words and all kinds of relevance factors used for personalisation has severe limitations, more advanced methods were required for the present invention. The information should be further ranked based on its popularity (relevance) among the readers and stored in the database only if it has been determined as sufficiently relevant.

Several approaches to determining the relevance or popularity of an information object may be used, as has been outlined above. Two methods shall be named exemplarily. When using web browsers for interacting with the system according to the invention, cookies may be used for determining how many readers have opened a particular link under investigation. This determines a mere popularity, as a relevance ranking criterion. As a further alternative or additional possibility, the users can be asked interactively to rank each information object they have retrieved.

US 5 748 954 and US 6 006218, for example, describe methods for searching data collections like the Internet. The determination of the relevance may be accomplished by any of the patents US 6 202 058, US 6 173 287, or JP 105 764 A2.

An essential aspect of the invention resides in the combination of techniques: to first filter assumably relevant information from a data collection like the Internet, based on key search criteria, optionally presenting it to the user, and then to filter the information according to relevance criteria, for eventually storing only the most interesting information objects in a local data base, like a portal. In this way, the quality of the information automatically retrieved from the Internet can be enhanced significantly.

In the following, an exemplary embodiment of the invention shall be described. The inventive method and system automatically analyses the information accordingly:
1. The information objects, e.g. news, are filtered at given intervals, from an a data pool like an Internet source, e.g. an Internet News services according to some key word or other search criteria.
2. The information is shown to the user, e.g. via a portal application using links to the retrieved information objects.
3. The relevance of the information objects is determined, e.g. by the number of people who have opened a particular link, or a rating that the users give for the usefulness of the information objects behind the link.
4. The most relevant news are automatically and periodically stored into the local data base for easy and fast access.

## Claims

1. Process for automatically generating and/or improving a data collection of information objects, comprising the following steps:
- retrieving at least one information object from a data pool of information objects;
- determining the relevance of at least one of the retrieved information objects to at least one user; and
- storing those information objects in a data collection, which have a relevance greater than a preset threshold.

2. Process according to claim 1, **characterised in that** the retrieved information objects are found in the data pool by user determined search criteria.

3. Process according to claim 1 or 2, **characterised in that** the data collection is implemented in an information portal presenting references to information objects.

4. Process according to any of claims 1 to 3, **characterised in that** the data collection comprises a plurality of categories, under which the information objects are stored.

5. Process according to any of claims 1 to 4, **characterised in that** the information objects stored in the data collection are more readily accessible than the information objects in the data pool.

6. Process according to any of claims 1 to 5, **characterised in that** the data pool resides in an intranet, an extranet, or the Internet.

7. Process according to any of claims 1 to 6, **characterised in that** a profile of interests predetermined for each user is used for determining the relevance of the information objects.

8. Process according to any of claims 1 to 7, **characterised in that** the relevance of the information object is determined for a plurality of users, and that the preset threshold is calculated from individual thresholds of the users in the plurality of users.

9. Process according to any of claims 1 to 8, **characterised in that** the relevance of an information object is determined by presenting the information object to a user, and letting the user indicate the relevance for said information object.

10. Process according to claim 9, **characterised in that** the user's indication of the relevance of an information objects also determines whether this information object is further used for updating that user's profile of interests.

11. Process according to any of claims 1 to 10, **characterised in that** the relevance of an information object is determined by the number of invocations of said information object by a user or by a plurality of users.

12. Data collecting system for automatically generating and/or improving a data collection of information objects, comprising
an information object retrieving means for retrieving information objects from a data pool of information objects;
a relevance determination means for determining the relevance of at least one of the retrieved information objects to at least one user and for determining if the relevance of an information object is higher than a preset threshold;
a data collection for storing information objects having a relevance higher than the threshold.

13. Data collecting system according to claim 12, **characterised in that** it further comprises an information access system for presenting retrieved informations objects, and information objects contained in the data collection, and for selecting information objects by a user.

14. Data collecting system according to claim 13, **characterised in that** the information access system further comprises means for a user defined indication of the relevance.

15. Data collecting system according to any of claims 12 to 14, **characterised in that** the relevance determining means comprises a profile of interests for the at least one user used for determining the relevance of an information object to said user.

16. Data collecting system according to any of claims 12 to 15, **characterised in that** it further comprises a profile modification means for modifying the profile of interest based on new information objects having a relevance higher than the threshold.

17. Data collecting system according to any of claims 12 to 16, **characterised in that** it is computer program product, the components of which can be loaded at least partly into the main memory of a digital data processing device, and the program components of which can be executed by said digital processing device.

18. Use of the relevance of an information object to a user for determining if the information object will be stored in a data collection accessible at least to this user.
